# EUROPEAN PATENT APPLICATION

(11) **EP 1 785 310 A2**
(43) Date of publication of application: **16.05.2007**
(21) Application number: 06023410.1
(22) Date of filing: 10.11.2006
(51) Int. Cl.: B60L 11/18

(54) **Vehicle storage apparatus**

(30) Priority: 11.11.2005 GB 0523068
(71) Applicant: Child, Nicholas Edward, Bath BA1 2TP (GB)
(72) Inventor: Child, Nicholas Edward, Bath BA1 2TP (GB)
(74) Representative: Pearson, James Ginn

(57) **Abstract**

An apparatus comprises a publicly accessible enclosure 1 and a multiplicity of electric vehicles, for example electric bikes, secured therein, each electric vehicle being connected to a recharging source 19. The apparatus may further comprise a voltage identifying device, the voltage identifying device being arranged to identify the correct voltage to be supplied to each vehicle. The voltage identifying device may include a PCB. The apparatus may comprise a gang 17 of recharging sockets. The sockets may be adapted to charge 24, 36 and/or 48 volt batteries.

## Description

The present invention relates to electric vehicles, and more particularly to an apparatus and method for storing and recharging electric vehicles.

Many electric vehicles require regular recharging to ensure that they operate effectively. Vehicles are typically recharged at the residence of the vehicle owner, where the vehicle is most likely to be able to be securely stored and be conveniently close to a recharging source.

The vehicle owner is usually, therefore, limited to only one place that he can easily recharge the vehicle. As such, the distance and/or time of a journey to be made by means of an electric vehicle can be limited, if the user is only able to recharge the vehicle at home.

In addition, finding a suitable storage space close to a recharging source can be problematic in many residences.

It is an object of the present invention to provide an apparatus that mitigates at least one of the above-mentioned problems.

According to the present invention there is provided an apparatus comprising a publicly accessible enclosure and a multiplicity of electric vehicles secured therein, each electric vehicle being connected to a recharging source. The present invention thus provides a publicly accessible apparatus in which electric vehicles may be conveniently and securely stored, and at the same time recharged. As a result of both the vehicles being (a) able to be secured to the enclosure and (b) the enclosure being publicly accessible, different members of the public may use the apparatus to store and recharge their vehicles.

The electric vehicles may be electric bikes. The electric vehicles may be electric scooters. The electric vehicles may be electric cars. The electric vehicles may be electric mobility vehicles. The electric vehicles may be a combination of any of the above-mentioned vehicles.

Preferably the enclosure is immoveable. The enclosure may be securely fixed to an immoveable object. For example, the enclosure may be built on, embedded in, or fixed to, the ground. The enclosure may be fixed to a wall or the like.

The enclosure preferably comprises at least one fixture to which at least one of the vehicles is secured. The fixture may be in the form of a bike stand. Preferably the enclosure comprises a plurality of fixtures.

The enclosure may comprise at least one boundary. The fixture may define at least a part of a boundary of the enclosure. For example, the boundary of the enclosure may comprise a rail, or a plurality of railings to which the electric vehicle may be secured.

The enclosure is preferably of a size suitable for securing and recharging at least 5 electric vehicles, and more preferably 10 electric vehicles, and yet more preferably 20 electric vehicles. The width of the enclosure is preferably greater than 1.5m. However, the width of the enclosure is preferably less than 6m. The length of the enclosure is preferably greater than 3m. However the length of the enclosure is preferably less than 10m.

The apparatus may be modular. The enclosure may be arranged to connect, incorporate or extend to a second enclosure. The apparatus advantageously comprises a first enclosure and a second enclosure, the first enclosure being arranged to connect, incorporate or extend to the second enclosure. Such a modular arrangement is particularly advantageous because it allows additional enclosures to be added to, and removed from, the apparatus in dependence on, for example, the demand for the apparatus.

The enclosure is preferably approximately the size of a car parking bay. Advantageously the apparatus is located in a car park. It will be appreciated that locating the apparatus in a car park is of particular benefit as the apparatus is thus, typically, in an easily accessible public location.

The enclosure preferably further comprises an entranceway for allowing passage of the vehicle. The entranceway is preferably open to allow easy passage of a vehicle. For example, the entranceway need not contain a door.

There may be provided one recharging source for each electric vehicle in the enclosure. There may be a multiplicity of recharging sources. A multiplicity of recharging sources may be powered by a common power supply. A plurality of recharging sources may be provided as a cluster of sources in one location. It will be understood that reference herein to features in relation to multiple recharging sources, apply equally to a single recharging source, and *vice versa.*

Advantageously each recharging source is mounted on the enclosure. The recharging sources may be located in relative proximity to each other. The recharging sources may be spaced apart around the enclosure.

The recharging sources may be operable to charge at AC and/or DC voltages.

Preferably at least one recharging source is a 24 Volt charger DC (Direct Current). Preferably at least one recharging source is a 36 Volt charger DC. Preferably at least one recharging source is a 48 Volt charger DC. At least one recharging source may be a charger having a voltage rating of between 12 and 60 Volts DC.

The recharging sources may be arranged to charge at a wide variety of voltages. Advantageously the recharging sources are arranged to be able to act as a 24, 36 and/or 48 Volt charger DC, possibly at the selection of the user. Some electric vehicles typically have a built-in charger. Advantageously therefore, at least one recharging source provides an AC (Alternating Current) supply, the AC supply being suitable for use with a built-in charger. At least one recharging source preferably provides between 100 and 300 Volts AC. At least one recharging source preferably provides 115 and/or 240 Volt AC.

The recharging sources may be arranged to provide an AC voltage, and preferably a particular AC voltage, at the selection of the user.

The recharging source(s) advantageously comprise a switch, the recharging source being arranged to be able to supply voltage only when the switch is in a first position. Advantageously, the switch is operable, and preferably exclusively operable, by a user with a suitable key. The recharging source is thus relatively safe against accidental or abusive use.

The recharging sources are preferably located in proximity to a fixture of the enclosure. Thus the electric vehicles may be secured to the fixture whilst being connected to the recharging sources.

The vehicles are preferably connected to the recharging sources via a cable. Each vehicle is preferably connected to a recharging source via a separate cable. Typically the length of a recharging cable is 1m or less. Thus the recharging source is preferably located within 1m of the fixture.

A preferable feature of the present invention is that the correct voltage to be supplied to each vehicle may be automatically determined. This may simplify the recharging process for the user. Advantageously the apparatus comprises a voltage identifying device, the voltage identifying device being arranged to identify the correct voltage to be supplied to each vehicle. The recharging source is preferably arranged to supply the correct voltage to each vehicle, in dependence on the identification by the voltage identifying device. The recharging source may comprise the voltage identifying device.

The apparatus may comprise a device for providing details of the correct voltage to be supplied. The device for providing details of the correct voltage may be in the form of a printed circuit board (PCB). The device for providing details of the correct voltage may be associated with the voltage identifying device.

Each vehicle, and/or each cable, may comprise a device for providing details of the correct voltage to be supplied. In an embodiment in which the device for providing details of the correct voltage to be supplied is in each cable, the cables may be associated with specific vehicles, each vehicle having a specific voltage rating.

The cables preferably comprise a lock, for example a steel cable, for securing the cable to the vehicle. The user of the vehicle may thus retain the cable specific to their vehicle.

The voltage identifying device may be arranged to detect the device for providing details of the correct voltage, and thus identify the correct voltage to be supplied to each vehicle. The voltage identifying device may, for example, supply a small current suitable for detecting the device.

The apparatus may comprise an indicator for indicating whether the recharging source is recharging. The indicator may, for example, comprise an LED.

According to another aspect of the invention, there is provided an enclosure for use in the apparatus of the present invention. The enclosure may have any of the features described above in relation to the apparatus of the invention. For example, the enclosure may include one or more recharging sources. The enclosure may be fixed in a publicly accessible area.

According to yet another aspect of the invention, there is provided a method of storing and recharging a multiplicity of electric vehicles, the method comprising the steps of (i) securing the vehicles in a publicly accessible enclosure and (ii) recharging the vehicles using a recharging source located in the enclosure. The enclosure may be arranged in accordance with any aspect of the present invention herein described. It will be appreciated that any features described with reference to the apparatus of the invention, are equally applicable to the method of the invention, and *vice versa.*

Various embodiments of the invention will now be described, by way of example only, with reference to the accompanying schematic drawing showing a perspective view of an apparatus in accordance with the invention.

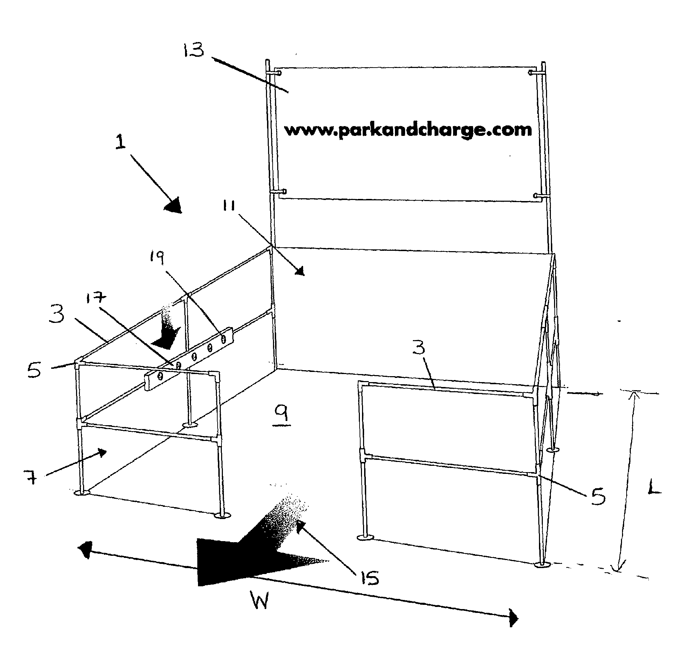

Figure 1 shows an apparatus comprising an enclosure 1 of approximately rectangular form. The length L of the enclosure is 4m and the width W is 2m. The enclosure is located in a public car park and is approximately the size of a car parking space in the car park.

The enclosure 1 comprises metal tubing 3 joined at lugs 5, which forms an arrangement of railings 7. The base of the railings is set in the concrete of the car park floor 9. The rear of the enclosure is defined by a wall 11 in the car park, on which a sign 13 indicating the presence of the enclosure 1 is mounted. The enclosure 1 includes, at its front, an entranceway 15 through which electric vehicles may easily be manoeuvred and which is open to the public.

The railings 7 define the boundary of the enclosure 1 and also act as an immoveable fixture to which electric vehicles may be secured with conventional locks. The enclosure 1 thereby provides a secure and convenient location in which vehicles may be stored.

Connected at mid-height on the railings 7 is a gang 17 of five recharging sockets 19. The gang 17 is connected to a mains power source (not shown). The sockets are adapted to charge 24, 36 and 48 Volt batteries and accommodate most types of recharging cable.

A multiplicity of electric vehicles (not shown) may therefore be secured in the enclosure and recharged by connecting their respective batteries to the sockets 19 of the gang 7 by means of recharging cables (not shown).

Each of the recharging sockets 19 comprises a voltage identifying device (not shown) arranged to supply a small 'supervising' current to the cables when the cables are connected thereto. The supervising current passes through a PCB built into the each cable, the PCB being arranged to output a signal to the voltage identifying device. The voltage identifying device thus determines the level of voltage the recharging socket should supply to that particular cable/vehicle.

According to a second embodiment (not shown), the enclosure is bounded by a brick wall and has a length of 6m, a width of 4m and a height of 1m. The wall includes an opening at one end through which the public may access the enclosure with a vehicle.

On the floor of the enclosure there is a plurality of vehicle stands in which electric vehicles can be supported and to which the electric vehicles can be secured. Fifteen recharging sockets are equally spaced around the inner face of the wall.

The present invention thus provides a secure and publicly accessible enclosure in which vehicles can be recharged and secured.

According to a third embodiment (not shown), the apparatus has a gang of five recharging sockets mounted on the enclosure. The apparatus is arranged to determine the operating voltage of any vehicle that is connected to the sockets for recharging. Accordingly, the gang of recharging sockets comprises an electronic circuit that passes a small current through a cable (and any vehicle connected to that cable) as and when it is connected to one of the sockets. The electronic circuit is arranged to identify, by way of this small current, the charging voltage of the battery in the vehicle. The manner in which the small current is used by the apparatus to investigate the battery of the vehicle to ascertain its voltage rating may utilise any suitable method known to the skilled man.

Each of the five sockets is operable to output a wide range of charge voltages. However, the specific charge voltage that is supplied in any one case depends on the charging voltage that was identified by the apparatus. Thus the sockets can be used to charge a wide variety of vehicle types/models. Furthermore, the voltage determination is automatic and requires no selection by the user.

In the third embodiment, a series of LEDs are built into the gang of sockets (one LED per socket). Each LED is arranged to indicate when its associated socket is charging (the LED emits green light) and when it has finished charging (the LED emits red light).

## Claims

1. An apparatus comprising a publicly accessible enclosure and a multiplicity of electric vehicles secured therein, each electric vehicle being connected to a recharging source, the apparatus further comprising a voltage identifying device, the voltage identifying device being arranged to identify the correct voltage to be supplied to each vehicle.

2. An apparatus according to claim 1, wherein the enclosure comprises at least one fixture to which at least one of the vehicles is secured, the fixture defining at least part of a boundary of the enclosure.

3. An apparatus according to claim 1 or claim 2, wherein the boundary of the enclosure comprises a plurality of railings.

4. An apparatus according to any preceding claim, wherein the recharging source is mounted on the enclosure.

5. An apparatus according to any preceding claim, wherein the recharging source is a charger having a voltage rating of between 12 and 60 Volts DC.

6. An apparatus according to any of claims 1 to 4, wherein the recharging source provides between 100 and 300 Volts AC.

7. An apparatus according to any preceding claim, further comprising a multiplicity of recharging sources.

8. An apparatus according to any preceding claim, wherein the apparatus comprises a first enclosure and a second enclosure, the first enclosure being arranged to connect, incorporate or extend to the second enclosure.

9. An apparatus according to any preceding claim wherein the electric vehicle is an electric bike.

10. A combination of an enclosure and recharging sources, the combination being suitable for use in the apparatus of any preceding claim.

11. A method of storing and recharging a multiplicity of electric vehicles having different recharging requirements, the method comprising the steps of (i) securing the vehicles in a publicly accessible enclosure; (ii) connecting the vehicles to a recharging source located in the enclosure; (iii) automatically identifying the voltage at which each vehicle should be recharged; and (iv) recharging the vehicles at the voltages so identified.

12. A method according to claim 11 using the apparatus of any of claims 1 to 9.
